**Europäisches Patentamt**

(19) **European Patent Office**

**Office européen des brevets**

(11) Numéro de publication: **0 009 551**
**B1**

(12) **FASCICULE DE BREVET EUROPEEN**

(45) Date de publication du fascicule du brevet: **08.09.82**

(51) Int. Cl.³: **H 04 L 11/16,** G 06 F 11/00

(21) Numéro de dépôt: **79102451.6**

(22) Date de dépôt: **16.07.79**

(54) Circuit d'appel des terminaux dans un système de transmission de données.

(30) Priorité: **22.09.78 US 944960**

(43) Date de publication de la demande:
**16.04.80 Bulletin 80/8**

(45) Mention de la délivrance du brevet:
**08.09.82 Bulletin 82/36**

(84) Etats contractants désignés:
**DE FR GB**

(56) Documents cités:
**FR - A - 2 363 954**

**TOUTE L'ELECTRONIQUE, novembre 1975**
**"Les commutateurs anologiques I: les**
**technologies en présence" pages 30—34.**

(73) Titulaire: **International Business Machines**
**Corporation**
**Armonk, N.Y. 10504 (US)**

(72) Inventeur: **Conner, David Eugene**
**807 Warren Avenue**
**Cary, NC 27511 (US)**
Inventeur: **Hoffman, Charles Reeves**
**1537 Shadowood Ln.**
**Raleigh, NC 27612 (US)**
Inventeur: **Laakso, Melvin Thomas**
**807 Prince Street**
**Cary, NC 27511 (US)**

(74) Mandataire: **Bonneau, Gérard**
**COMPAGNIE IBM FRANCE Département de**
**Propriété Industrielle**
**F-06610 La Gaude (FR)**

Courier Press, Leamington Spa, England.

Circuit d'appel des terminaux dans un système de transmission de données

Description
Domain technique

La présente invention concerne de façon générale un circuit pour l'établissement sélectif des connexions entre un processeur central et un certain nombre de stations, et plus particulièrement un circuit d'appel des terminaux d'un système de transmission de données, permettant le transfert du signal d'appel vers le terminal suivant lorsqu'aucune communication de données ne doit être établie et l'évitement du terminal en l'absence de sa mise sous tension.

Etat de la technique

Un système de traitement de données d'appel peut être généralement défini comme un système comprenant un processeur central et plusieurs unités périphériques ou stations desservant un terminal, et pouvant être individuellement reliées directement au processeur central par un bus de données à un instant donné. D'une façon générale, le processeur central génère un signal d'appel qui est transmis aux stations pour indiquer que le processeur central est prêt à communiquer avec une station quelconque demandant à être servie.

Dans un système du type réception/retransmission, le signal d'appel est transmis d'une station à la station suivante en séquence. Dans le cas où une station particulière ne demande pas à être servie au moment où le signal d'appel est reçu, elle retransmet le signal d'appel à la station suivante dans la boucle.

Le signal d'appel est capturé par le première station demandant à être servie et n'est pas reçu ou "vu" par les stations disposées en aval.

Chaque terminal dans une boucle n'est pas toujours en service. Pour les opérations de traitement de données normales, un ou plusieurs terminaux peuvent être hors service à un instant donné en raison de l'absence de demande, ou d'opérations de maintenance ou d'équipment défectueux.

Lorsque l'alimentation est coupée pour un terminal la station correspondante est incapable de retransmettre le signal d'appel.

Afin d'éviter le blocage prématuré du signal d'appel par le premier terminal hors service d'une boucle, chaque station comporte un circuit d'évitement qui peut être utilisé pour transférer un signal d'appel en évitant un terminal hors service, directement à la station suivante dans la boucle.

Les circuits d'évitement de l'art antérieur comprennent généralement un relais électro-mécanique monté en parallèle avec chaque terminal de la boucle. Lorsque l'alimentation est appliquée au terminal, le relais est maintenu ouvert afin de permettre le transfert du signal d'appel au terminal du côté de l'entrée du relais.

Dans le cas où le terminal ne demande pas à être servi par le processeur central, le terminal retransmet le signal d'appel à une ligne de signal d'appel du côté de la sortie du relais d'évitement. Le signal d'appel retransmis est transféré à la station suivante de la boucle.

Si, pour une raison quelconque, l'alimentation est coupée à un terminal particulier, le relais d'évitement se ferme tandis qu'un autre relais électro-mécanique à l'entrée du terminal s'ouvre pour interdire l'entrée de signaux d'appel dans ce terminal. Tout signal d'appel généré après le changement d'état du relais évite le terminal isolé en passant par le relais d'évitement fermé.

Bien que les relais électro-mécaniques présentent un avantage par le fait qu'ils assurent un évitement avec une impédance minimum, c'est-à-dire avec une dégradation minimum du signal, ils souffrent cependant d'inconvénients significatifs. Non seulement les relais électro-mécaniques ont un coût initial plus élevé que les éléments intégrés, mais ils occupent un volume plus important et consomment plus de puissance que les dispositifs de commutation purement électroniques. En outre, les relais électro-mécaniques ne présentent généralement pas le même niveau de fiabilité que les dispositifs intégrés. De plus, les relais électro-mécaniques doivent être testés par l'application de procédés de test spéciaux non applicables aux dispositifs à structure intégrée.

C'est pourquoi on a pensé à remplacer les relais électro-mécaniques par des transistors qui ne présentent pas les inconvénients des relais cités plus haut. Ainsi le document FR—A—2 363 954 décrit un système de communication de données entre un organe de contrôle centralisé et des stations en série, dans lequel chaque station comporte un transistor entre son entrée et sa sortie. Lorsque la station est en fonctionnement normal, c'est-à-dire qu'elle est alimentée, le transistor reste bloqué ce qui fait que les signaux d'appel reçus à l'entrée sont, soit interceptés par le récepteur de la station s'ils sont destinés à cette dernière, soit retransmis sur la ligne de sortie de la station s'ils sont destinés à une autre station se trouvant en aval. Si l'alimentation d'un périphérique devient défectueuse, son transistor devient alors passant et tout signal à l'entrée est transmis directement par la sortie à la station suivante sans passer la station dont l'alimentation est défectueuse.

Malheureusement, le dispositif décrit dans le document FR—A—2 363 954 présente certains inconvénients lorsque l'alimentation d'une station devient défectueuse. D'une part, il faut un certain temps après que l'alimentation soit devenue défectueuse pour que le transistor de la station devienne conducteur et permette ainsi aux signaux d'appel d'éviter la station. Par conséquent entre l'instant où le terminal nonalimenté a cessé de recevoir les signaux d'appel et l'instant où les signaux ont pu éviter la station grâce au transistor conducteur, un intervalle de tempts s'est écoulé au cours duquel des signaux arrivant à l'entrée de la station ont pu être perdus.

D'autre part, rien n'est prévu pour isoler le dispositif de réception d'une station dont l'alimentation est hors service. Cette station continue donc à recevoir des signaux d'appel simultanément avec une station située en aval et ceci peut donc entraîner des perturbations, principalement au moment de la remise en service de l'alimentation.

Exposé de l'invention

L'objet de l'invention est donc un circuit d'appel de terminaux dans un système de transmission de données à partir d'un processeur central, ne présentant pas les inconvénients des systèmes de l'art antérieur énoncés ci-dessus.

Le circuit d'appel comprend, dans chacune des stations, un transistor à effet de champ en mode d'appauvrissement présentant une électrode drain connectée à une ligne d'entrée du signal d'appel, une électrode source connectée à une ligne de sortie du signal d'appel et une électrode de commande ou grille. Un circuit de réception et d'évitement est connecté à la ligne d'entrée du signal d'appel, à le grille du transistor à effet de champ et au terminal. Le circuit de réception et d'évitement répond à l'alimentation de la station pour établir une tension d'interdiction de conduction à la grille du transistor à effet de champ tout en transférant les signaux d'appel d'entrée au terminal. Dans le cas où un terminal particulier désire établir une liaison de communication avec l'unité centrale, le signal d'appel est capturé. Cependant, dans le cas où un terminal ne désire pas établir une liaision avec l'unité centrale, il retransmet le signal d'appel à la ligne de signal d'appel conduisant à la station suivante de la boucle. Le transistor à effet de champ est conducteur lorsqu'une station n'est pas alimentée ce qui permet au signal d'appel de passer directement de la ligne d'entrée à la ligne de sortie plutôt que d'être acheminé au travers du terminal. La résistance électrique présentée par le transistor à effet de champ en absence d'alimentation est de l'ordre de 1 ohm ou moins si bien que la dégradation du signal d'appel est minimale.

Le circuit de réception et d'évitement de chaque station comprend en outre une impédance d'extrémité présentant une première borne connectée à la masse et une deuxième borne connectée à la ligne d'entrée dudit terminal, des moyens de commutation montés en série sur la ligne de signal d'appel entre ladite deuxième borne et l'entrée du signal d'appel audit circuit de réception et d'évitement, et des moyens de chronologie pour appliquer séquentiellement un signal de conditionnement auxdits moyens de commutation puis un signal de blocage audit transistor à effet de champ lorsque le terminal est sous tension, et appliquer séquentiellement un signal de conduction audit transistor à effet de champ puis un signal d'inhibition auxdits moyens de commutation lorsque l'alimentation est coupée au terminal.

Brève description des figures

La figure 1 est une représentation schématique d'un système de transmission de données incorporant la présente invention.

La figure 2 est une représentation schématique d'une station comprenant un circuit de réception et d'évitement réalisé selon les enseignements de la présente invention.

La figure 3 est une représentation schématique plus détaillée du circuit de régulation utilisé dans les circuits de démarrage et de chronologie du circuit de réception et d'évitement de la figure 2.

La figure 4 est une représentation graphique des tensions générées en des points particuliers du circuit de régulation de la figure 3.

Mode de réalisation préféré

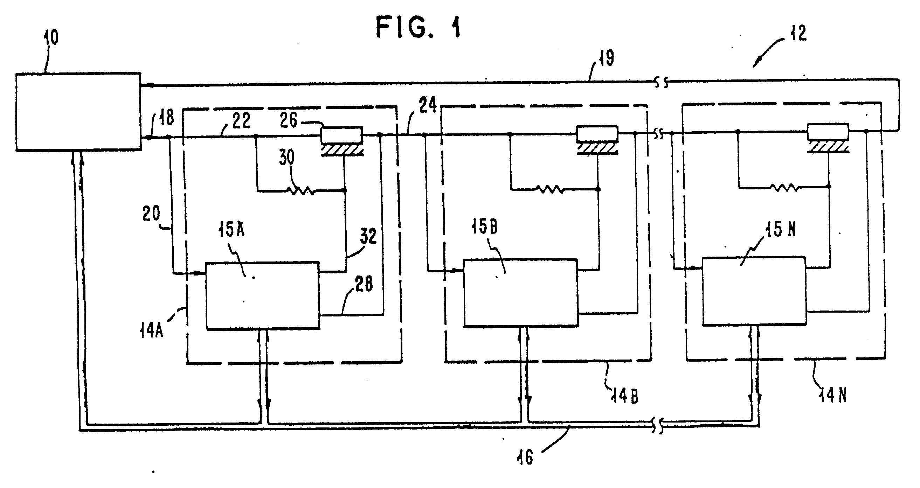

La figure 1 représente un système dans lequel la présente invention peut être mise en oeuvre et comprend un processeur central 10 et une boucle 12 de stations 14A, 14B,..., 14N, n'importe laquelle de ces dernières pouvant être reliée au processeur central 10, à un instant donné, par l'intermédiaire d'un bus de données 16. Les stations sont également reliées au processeur central 10 par l'intermédiaire d'une ligne de signal d'appel 18.

Dans les systèmes de traitement de données actuels, les stations individuelles comprennent des terminaux qui peuvent avoir des possibilités et des fonctions différentes. En fait, le terme "terminal" est utilisé génériquement et son application n'est pas limitée à un type particulier de dispositif. Par exemple, un terminal peut être un terminal d'affichage, une imprimante, une unité de commande d'entrée/sortie ou même un autre processeur central. Les différences réelles entre les divers types de terminaux n'ont aucune importance en ce qui concerne la description de la présente invention étant donné que leurs caractéristiques ne sont pas susceptibles d'affecter la pratique de celle-ci. Il est seulement nécessaire que tous les terminaux de la boucle soient capables de retransmettre un signal d'appel lorsqu'ils ne demandent pas à être servis, et de communiquer avec le processeur central lorsqu'ils demandent à être servis.

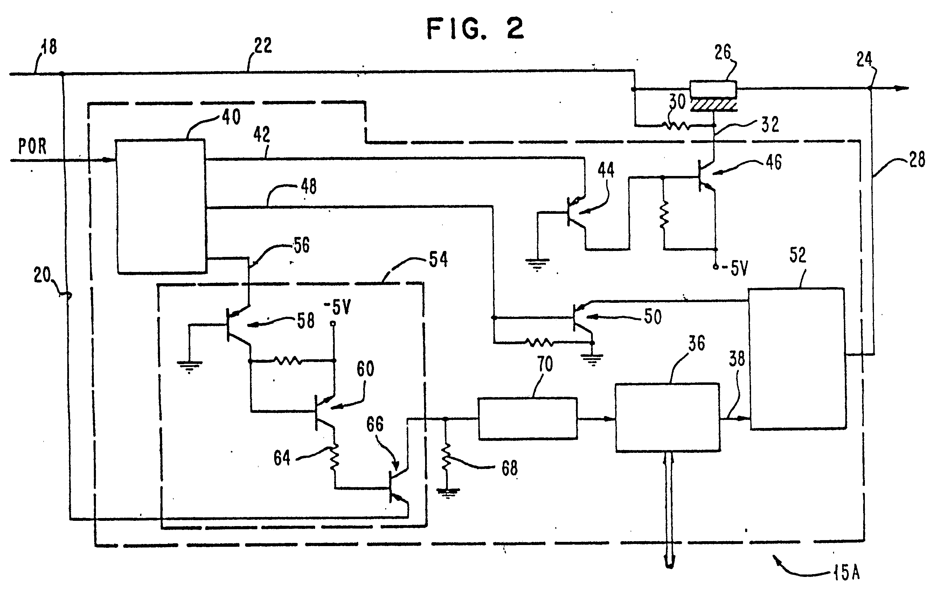

Les connexions d'entrée et de sortie pour la station 14A seront décrites en détail ci-dessous. Il est évident que toutes les autres stations de la boucle présenteront des connexions d'entrée et de sortie identiques. La ligne de signal d'appel 18 est formée d'une ligne d'entrée 20, d'une ligne d'évitement 22 et d'une ligne de sortie 24. La ligne d'évitement 22 comprend un transistor à effet de champ en mode d'appauvrissement 26 comportant des électrodes drain et source définissant une liaison sélectivement conductrice par laquelle la ligne d'entrée 20 peut être directement connectée à la ligne de sortie 24. Une résistance de polarisation est connectée entre les électrodes drain et grille due transistor à effet de champ 26. La tension à l'électrode grille est fonction d'une sortie 32 de la station 14A. Une autre sortie 28 de la station 14A est directement connectée à la ligne de sortie 24. Chacune des stations 14A,..., 14N comprend un circuit de réception et d'évitement 15A,..., 15N qui sera décrit en détail avec la figure 2.

Chaque station de la boucle comprend des circuits classiques pour la génération d'un signal de mise sous tension et restauration (POR). Le signal POR est utilisé pour mettre en condition de fonctionnement les registres et les compteurs du terminal de la station lorsque l'alimentation est réappliquée au terminal. Le côté sortie de la dernière station de la boucle est connecté directement au processeur central 10 par l'intermédiaire d'une ligne de retour 19, pour fermer la boucle. Le signal d'appel est renvoyé au processeur central 10 par la ligne 19 lorsqu'aucune des stations ne demande à être servie. Les stations non alimentées sont évitées à la suite du fonctionnement du circuit de réception et d'évitement qui sera décrit en détail en se reportant à la figure 2.

Sur la figure 2, on voit que chaque circuit de réception et d'évitement est utilisé en combinaison avec un terminal 36 qui peut être d'un type classique. Le terminal 36 doit pouvoir retransmettre un signal d'appel sur une ligne de sortie 38 dans le cas où il ne demande pas à être servi par le processeur central.

Le circuit de réception et d'évitement comporte un circuit de démarrage et de chronologie 40 et reçoit le signal POR comme entrée. Le circuit 40 présente une première ligne de sortie 42 qui est connectée à l'émetteur d'un transistor 44 dont la base est reliée à la masse. Le collecteur du transistor 44 est connecté directement à la base d'un deuxième transistor 46. Le collecteur du transistor 46 est connecté à la grille du transistor à effet de champ en mode d'appauvrissement 26 tandis que l'émetteur du transistor 46 est connectée à un bus de tension négative. Les transistors 44 et 46 forment un circuit de conversion de tension passant les niveaux de tension délivrés par le circuit 40 aux niveaux de commutation appropriés pour le transistor à effet de champ 26.

Une deuxième ligne de sortie 48 du circuit 40 est connectée à la base d'un transistor 50 qui, lorsqu'il est conducteur, verrouille ou met à la masse un circuit d'excitation de ligne classique 52. Le circuit d'excitation de ligne 52 est normalement utilisé pour amplifier un signal d'appel retransmis par le terminal 36. Afin d'éviter les transmissions parasites, l'excitateur de ligne 52 est relié à la masse au travers du transistor 50 chaque fois que l'alimentation est coupée à la station.

Une troisième ligne de sortie 56 du circuit 40 délivre un signal de commande pour un commutateur à faible impédance 54 placé sur la ligne 20. La ligne de sortie 56 est connectée à l'émetteur d'un transistor 58 présentant une base raccordée à la masse et un collecteur connecté à la base d'un autre transistor 60. L'émetteur du transistor 60 est connecté directement à un bus de tension négative. Le collecteur du transistor 60 est connecté au travers d'une résistance 64 à la base d'un transistor de commutation 66 dont les électrodes d'émetteur et de collecteur sont disposées en série sur la ligne d'entrée 20. Le collecteur du transistor 66 est connecté à la fois à l'extrémité supérieure d'une impédance d'extrémité 68 et à un circuit récepteur de conditionnement de signal disposé à l'entrée du terminal 36.

Le circuit décrit ci-dessus functionne de la manière suivante pour diriger un signal d'appel vers le terminal 36 lorsque la station est alimentée ou pour que ledit signal d'appel évite la station lorsque celle-ci n'est pas alimentée.

Lorsque l'alimentation est appliquée à la station, le signal délivré par le circuit 40 et transmis par la ligne de sortie 42, est au niveau haut, ce qui rend le transistor 44 conducteur. A son tour le transistor 46 est conducteur pour établir une polarisation négative à la grille du transistor à effet de champ en mode d'appauvrissement 26. La polarisation négative de la grille appauvrit le canal drain/source, ce qui fait que le transistor à effect de champ 26 fonctionne comme un circuit ouvert sur la ligne d'évitement 22.

Lorsque le signal de la ligne de sortie 42 est au niveau haut, le signal de la ligne de sortie 48 issue du circuit 40 est également au niveau haut pour appliquer une tension de blocage à la base du transistor 50. Le transistor 50 est nonconducteur et isole le circuit de commande de ligne 52 de la masse.

Le signal de la ligne de sortie 56 est également au niveau haut lorsque l'alimentation est appliquée à la station, rendant les transistors 58 et 60 conducteurs. La trajectoire de conduction au travers du transistor 60 fournit la tension de polarisation négative à la base du transistor 66 qui rend le transistor 66 conducteur. Le transistor 66 fournit une trajectoire à faible impédance aux signaux d'appel appliqués au terminal 36 par l'intermédiaire de la ligne d'entrée 20.

En résumé, lorsque la station est alimentée, la ligne d'evitement 22 est coupée par le transistor à effet de champ non conducteur 26, le circuit de commande de ligne 52 est conditionné étant donné que le transistor non conducteur 50 coupe la mise à la masse et le signal d'appel est dirigé vers le terminal 36 au travers du transistor de commutation conducteur 66.

Lorsque l'alimentation n'est plus appliquée à la station, le signal sur la ligne de sortie 42 passe au niveau bas, ce qui coupe la conduction par le transistor 44. En conséquence, le transistor 46 devient non conducteur, coupant le circuit entre la grille du transistor à effet de champ 26 et le bus de tension négative. Le transistor à effet de champ 26 demeure conducteur malgré l'absence d'une tension de polarisation à la grille. Même en l'absence d'une tension de polarisation de grille, l'impédance du transistor à effet de champ est très faible, de l'order de 1 ohm ou moins, Il y a donc une dégradation minimale du signal d'appel lorsque celui-ci évite le sous-système non alimenté par la ligne d'évitement 22.

En l'absence d'alimentation, le signal sur la ligne de sortie 48 est également au niveau bas, ce qui permet au transistor 50 d'être conducteur. Lorsque le transistor 50 est conducteur, le circuit de commande de ligne 52 est raccordé directement à la masse et est effectivement déconditionné.

Le signal sur la ligne 56 est également au niveau bas en l'absence d'alimentation, ce qui provoque la non conduction des transistors 58, 60 et 66. Le transistor 66 fait effectivement fonction de coupe-circuit sur la ligne d'entrée de signal d'appel 20 pour interdire au signal d'appel d'atteindre le récepteur 70 et le terminal 36.

Pour que le circuit de réception et d'évitement fonctionne d'une manière apropriée, il ne suffit pas que les transistors 26, 50 et 66 prennent les états décrits ci-dessus pendant le fonctionnement de la station avec et sans alimentation, mais il faut aussi que ces états soient pris par les transistors selon une séquence prédéterminée lorsque l'alimentation est réappliquée à la station. Pour être plus plus précis, on dira que lorsque l'alimentation est réappliquée, le signal sur la ligne de sortie 48 passe tout d'abord au niveau haut pour supprimer le raccordement à la masse du circuit de commande de ligne 52. Puis, le signal sur la ligne de sortie 56 passe au niveau haut pour provoquer le passage du transistor 66 à l'état conducteur afin d'assurer une trajectoire à faible impédance entre la ligne d'entrée de signal d'appel 20 et le terminal 36. Finalement, le signal sur la ligne de sortie 42 passe au niveau haut pour l'application d'une tension de polarisation négative à la grille du transistor à effet de champ 26, ce qui provoque le coupure de la ligne d'évitement 22.

Lorsque la station est mise hors service en coupant l'alimentation, une séquence inverse se déroule. C'est-à-dire que le signal sur la ligne de sortie 42 passe tout d'abord au niveau bas pour supprimer l'application de la tension de polarisation négative à la grille du transistor à effet de champ 26. Le transistor 26 commence à conduire et restera conducteur en l'absence d'alimentation à la station. Le signal de sortie sur la ligne 56 passe ensuite au niveau bas pour commuter le transistor 66 à son état non conducteur, ce qui isole effectivement le récepteur 70 de la ligne d'entrée de signal d'appel 20. Finalement, le signal de sortie sur la ligne 48 passe au niveau bas pour raccorder le circuit de commande de ligne 52 à la masse au travers du transistor 50 qui est maintenant conducteur.

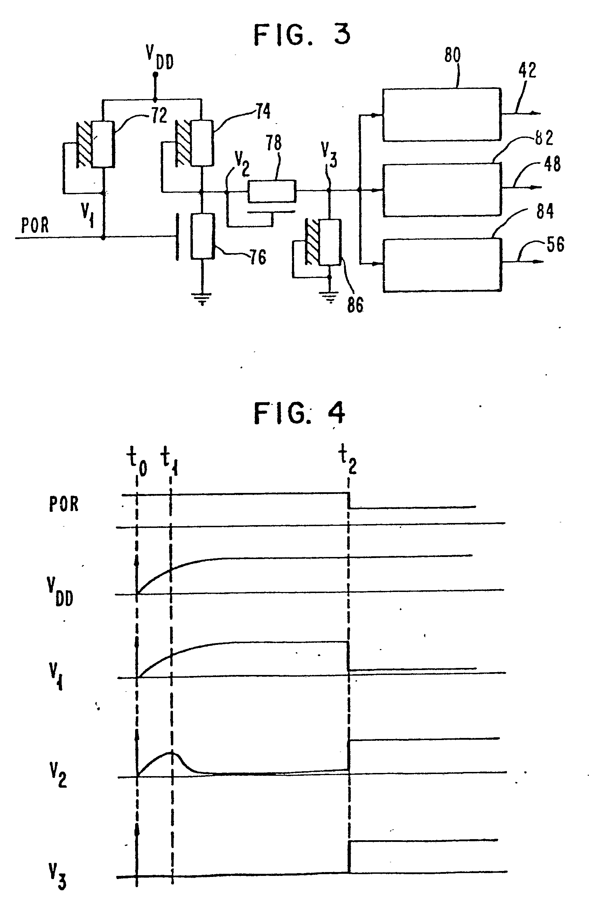

Pour éviter un déroulement de séquence inapproprié pouvant être provoqué par l'apparition d'impulsions aléatoires pendant la restauration de l'alimentation à la station, un circuit de régulation du type présenté à la figure 3 est utilise. Le circuit de régulation comprend un premier et un deuxième transistors à effet de champ en mode d'appauvrissement 72 et 74 qui comportent chacun un raccordement électrode de grille/électrode de source commun et une électrode de drain connectée à la source d'alimentation $V_{DD}$ du sous-système. L'électrode de source du transistor à effet de champ 72 est connectée à l'entrée POR et à la grille d'un transistor à effet de champ en mode d'enrichissement 76. L'électrode de source du transistor à effet de champ 76 est raccordée à la masse tandis que son électrode de drain est connectée à l'électrode de source du transistor à effet de champ 74. Cette connexion commune entre les transistors 74 et 76 est, à son tour, raccordée à l'électrode de drain d'un autre transistor à effet de champ en mode d'enrichissement 78 présentant une connexion drain/grille commune. L'électrode de source du transistor à effet de champ 78 est connectée aux entrées des circuits de chronologie 80, 82 et 84 dont les sorties respectives sont constituées par les lignes de sortie 42, 48 et 56. Le transistor à effet de champ en mode d'appauvrissement 87 présente une électrode de drain connectée à l'électrode de source du transistor 78 et ses électrodes de grille et de source sont raccordées à la masse.

Le fonctionnement du circuit de régulation indiqué ci-dessus sera décrit en se reportant à la figure 4 qui représente graphiquement les tensions en divers points du circuit pendant la mise sous tension de la station et la génération du signal de restauration (POR) qui suit. Initialement, le signal POR présente un niveau positif prédéterminé au-dessus de la masse. A un instant $t_0$ choisi arbitrairement, l'alimentation $V_{DD}$ du sous-système est restaurée et commence à croître du niveau zéro vers son niveau permanent. La tension $V_1$ à l'électrode de source du transistor à effet de champ 72 et à la grille du transistor à effet de champ 76 suit initialement $V_{DD}$. La tension $V_2$ commence également à suivre $V_{DD}$. Cependant, lorsque la tension $V_1$ excède la tension de seuil du transistor à effet de champ en mode d'enrichissement 76, ce transistor commence à conduire (à l'instant $t_1$), provoquant la chute de la tension $V_2$ vers la masse.

Lorsque le signal POR devient négatif à un instant $t_2$ choisi arbitrairement, le transistor à effet de champ 76 est bloqué, provoquant le décalage de la tension $V_2$ à un niveau plus positif. La tension $V_3$ est initialement maintenue au niveau de la masse ou au voisinage de celui-ci en utilisant un transistor à effet de champ 86 en mode d'appauvrissement relativement petit. Ceci est dû au fait que le transistor 86 assure une trajectoire directe vers la masse à bas niveaux, au moins, de $V_3$. Cependant, en raison de sa petite taille, le transistor 86 est rapidement saturé lorsque le transistor 78 devient conducteur. Une fois saturé, le transistor 86 n'affecte plus d'une manière appréciable la croissance de $V_3$.

Ainsi, on peut voir que le circuit de régulation permet d'avoir une tension de sortie graduelle qui n'est pas affectée par le fait que des pointes temporaires de tension de la station peuvent provoquer la conduction temporaire des transistors à effet de champ. La tension $V_3$ est utilisée comme une bascule pour chacun des trois circuits de chronologie 80, 82 et 84. Chacun des circuits de chronologie, d'un type classique, génère un signal de sortie qui passe au niveau haut après une période de temps prédéterminée à la suite de la montée de $V_3$ et passe au niveau bas après une période de temps prédéterminée différente à la suite de la suppression de l'alimentation à la station.

## Revendications

1. Circuit d'appel de terminaux dans un système de transmission de données comprenant un processeur central (10) et plusieurs stations en série (14A...14N) comportant chacune un terminal (36) pouvant répondre à un signal d'appel reçu sur une ligne d'entrée (18) par l'établissement d'une liaison de communication avec le processeur central; ledit circuit d'appel comprenant pour chacune des stations:

un transistor (26) ayant une électrode de commande (32), une deuxième électrode connectée à une ligne d'entrée (18, 22) de signal d'appel et une troisième électrode connectée à une ligne de sortie (24) de signal d'appel, et

un circuit de réception et d'évitement (15A...15N) connecté à la ligne d'entrée (18) de signal d'appel, à l'électrode de commande (32) dudit transistor (26) et au terminal (36), pour fournir lorsque la station est sous tension, une tension de blocage audit transistor par l'intermédiaire de son électrode de commande tout en appliquant au terminal un signal d'appel qui est retransmis sur la ligne de sortie (24) de signal d'appel dans le cas où aucune liaison de communication ne doit être établie avec ce terminal, ledit transistor (26) étant conducteur en l'absence de mise sous tension de la station pour permettre au signal d'appel de passer directement de la ligne d'entrée (18) à la ligne de sortie (24); ledit circuit d'appel étant caractérisé en ce que ledit circuit de réception et d'évitement comprend pour chacune des stations:

une impédance d'extrémité (68) présentant une première borne connectée à la masse et une deuxième borne connectée à la ligne d'entrée dudit terminal (36),

des moyens de commutation (54) montés en série sur la ligne de signal d'appel entre ladite deuxième borne et l'entrée (20) du signal d'appel audit circuit de réception et d'évitement,

des moyens de chronologie (40) pour appliquer séquentiellement un signal de conduction audit transistor (26) puis un signal d'inhibition auxdits moyens de commutation (54) lorsque l'alimentation est mise hors service, et appliquer séquentiellement un signal de conditionnement auxdits moyens de commutation (54) puis un signal de blocage audit transistor (26) lorsque le terminal (36) est de nouveau sous tension.

2. Circuit d'appel selon la revendication 1 caractérisé en ce que lesdites stations sont disposées selon une configuration en boucle.

3. Circuit d'appel selon l'une des revendications 1 et 2 caractérisé en ce que ledit transistor est un transistor à effet de champ (26) dont la grille est ladite électrode de commande (32), l'électrode de drain est connectée à la ligne d'entrée (18, 22) de signal d'appel et l'électrode de source est connectée à la ligne de sortie (24) de signal d'appel.

4. Circuit d'appel selon la revendication 3 caractérisé en ce qu'il comporte en outre:

un circuit de commande de ligne (52) présentant une sortie connectée à la ligne de sortie (24) de signal d'appel et

des moyens de déconditionnement (50) connectés entre lesdits moyens de chronologie (40) et ledit circuit de commande de ligne pour fournir un signal de déconditionnement audit circuit de commande de ligne lorsque l'alimentation est coupée audit terminal.

5. Circuit d'appel selon l'une des revendication 3 et 4 caractérisé en ce que lesdits moyens de chronologie (40) comprennent:

plusieurs circuits de chronologie (80, 82, 84), chacun d'eux étant capable de générer un signal prédétermine à un instant donné suivant l'application d'un signal de commande ($V_3$) au circuit de chronologie concerné, et

un circuit de régulation connecté aux entrées desdits circuits de chronologie pour neutraliser la génération dudit signal de commande jusqu'à ce qu'un signal de restauration d'entrée (POR) lui soit appliqué.

6. Circuit d'appel selon la revendication 5 caractérisé en ce que ledit circuit de régulation comporte en outre:

un deuxième transistor à effet de champ (72) en mode d'appauvrissement présentant une électrode de drain connectée à l'alimentation

($V_{DD}$) de la station et des électrodes de source et de grille sur lesquelles est applique le signal de restauration d'entrée (POR),

un troisième transistor à effet de champ (74) en mode d'appauvrissement présentant une électrode de drain connectée à l'alimentation ($V_{DD}$) de la station et des électrodes de source et de grille connectées à une jonction commune ($V_2$),

un premier transistor à effet de champ (76) en mode d'enrichissement présentant une électrode de drain connectée à ladite jonction commune ($V_2$), une électrode de source connectée à la masse et une électrode de grille sur laquelle est appliqué le signal de restauration d'entrée,

un deuxième transistor à effet de champ (78) en mode d'enrichissement présentant des électrodes de drain et de grille connectées à ladite jonction commune ($V_2$) et une électrode de source pour le transfert du signal de commande de sortie ($V_3$), et

un quatrième transistor à effet de champ (86) en mode d'appauvrissement présentant une électrode de drain connectée à l'électrode de source dudit deuxième transistor à effet de champ en mode d'enrichissement et des électrodes de source et de grille connectées à la masse.

7. Circuit d'appel selon l'une quelconque des revendications 3 à 6 caractérisé en ce que ledit circuit de réception et d'évitement (15) comporte en outre:

um premier transistor bipolaire (44) dont la base est raccordée à la masse, et l'émetteur est raccordé à une sortie (42) desdits moyens de chronologie (40), et

un second transistor bipolaire (46) dont la base est connectée au collecteur (dudit premier transistor, l'émetteur est connecté à une source de tension négative et le collecteur est connecté à la grille (32) dudit transistor à effet de champ (26).

8. Circuit d'appel selon l'une quelconque des revendications 3 à 7 caractérisé en ce que lesdits moyens de commutation (54) comprennent un transistor bipolaire (66) dont l'émetteur et le collecteur sont connectés en série sur la ligne d'entrée (20) du signal d'appel et dont la base est connectée à une sortie (56) desdits moyens de chronologie (40).

**Patentansprüche**

1. Datenendgerät-Abrufschaltung in einem Datenübertragungssystem mit einer Zentraleinheit (10) und mehreren seriengeschalteten Stationen (15A...15N), von denen jede ein Datenendgerät (36) einschließt, das auf ein auf einer Eingangsleitung (18) erhaltenes Abrufsignal ansprechen kann, indem mit der Zentraleinheit eine Kommunikationsverbindung hergestellt wird, wobei die Abrufschaltung für jede Station vorsieht:

einen Transistor (26) mit einer Steuerelektrode (32), mit einer zweiten mit der Eingangsleitung (18, 22) des Abrufsignals verbundenen Elektrode, und mit einer dritten mit einer Ausgangsleitung (24) des Abrufsignals verbundenen Elektrode, und

eine Empfangs- und Umgehungsschaltung (15A...15N), die mit der Eingangsleitung (18) des Abrufsignals, mit der Steuerelektrode (32) des Transistors (26) und mit dem Datenendgerät (36) verbunden ist, um an den Transistor bei eingeschalteter Station eine Sperrspannung über seine Steuerelektrode anzulegen, während auf das Datenendgerät ein Abrufsignal gegeben wird, das auf die Ausgangsleitung (26) des Abrufsignals zurücküber- tragen wird, wenn keine Kommunikationsver- bindung mit dem Datenendgerät hergestellt werden muß, wobei der Transistor (26) leitet, wenn die Station abgeschaltet ist, damit das Abrufsignal direkt von der Eingangsleitung (18) auf die Ausgangsleitung (24) weiterlaufen kann, und wobei die Abrufschaltung dadurch gekennzeichnet ist, daß die Emfangs- und Umgehungsschaltung für jede Station einschließt:

eine Endimpedanz (68) mit einer mit Erde verbundenen ersten Klemme, und mit einer mit der Eingangsleitung des Datenendgerätes (36) verbundenen zweiten Klemme,

Schaltmittel (54), die auf der Abrufsignalleitung zwischen der zweiten Klemme und dem Abrufsignaleingang (20) zu der Empfangs- und Umgehungsschaltung seriengeschaltet sind,

Taktmittel (40), um am Transistor (26) sequentiell ein Leitsignal und danach an den Schaltmitteln (54) ein Blockiersignal anzulegen, wenn die Stromversorgung abgeschaltet ist, und um sequentiell an die Schaltmittel (54) ein Konditionersignal und danach an den Transistor (26) ein Blockiersignal anzulegen, wenn das Datenendgerät erneut angeschaltet ist.

2. Abrufschaltung nach Anspruch 1, dadurch gekennzeichnet, daß die Stationen in einer Schliefenkonfiguration angeordnet sind.

3. Abrufschaltung nach einem der Ansprüche 1 und 2, dadurch gekennzeichnet, daß der Transistor ein Feldeffekttransistor (26) ist, dessen Gitter die Steuerelektrode (32) darstellt, und daß die Drainelektrode mit der Eingangsleitung (18, 22) des Abrufsignals und die Sourceelektrode mit der Ausgangsleitung (24) des Abrufsignals verbunden ist.

4. Abrufschaltung nach Anspruch 3, dadurch gekennzeichnet, daß sie weiterhin einschließt:

eine Leitungssteuerschaltung (52) mit einem an die Ausgangsleitung (24) des Abrufsignals angeschlossenen Ausgang, und

Dekonditioniermittel (50), die zwischen den Taktmitteln (40) und der Leitungssteuerschaltung geschaltet sind, um auf die Leitungssteuerschaltung ein Dekonditioniersignal zu geben, wenn das Datenendgerät abgeschaltet ist.

5. Abrufschaltung nach einem der Ansprüche 3 und 4, dadurch gekennzeichnet, daß die Taktmittel (40) einschließen:

mehrere Taktschaltungen (80, 82, 84), von denen eine jede ein vorbestimmtes Signal zu einem bestimmten Zeitpunkt nach Anlegen eines Steuersignals (V3) an die betreffende Taktschaltung erzeugen kann, und

eine Regulierschaltung, die an die Eingänge der Taktschaltungen angeschlossen ist, um das Erzeugen des Steuersignals zu unterbinden, bis ein Eingangsrückstellsignal (POR) angelegt wird.

6. Abrufschaltung nach Anspruch 5, dadurch gekennzeichnet, daß die Regulierschaltung weiterhin einschließt:

einen zweiten Feldeffekttransistor (72) im Verarmungsmodus mit einer an die Stromversorgung (VDD) der Station angeschlossenen Drainelektrode und mit Source- und Gitterelektroden, an die das Eingangsrückstellsignal (POR) angelegt wird,

einen dritten Feldeffekttransistor (74) im Verarmungsmodus mit einer an die Stromversorgung (VDD) der Station angeschlossenen Drainelektrode und mit an einen gemeinsamen Verbindungspunkt (V2) angeschlossenen Source- und Gitterelektroden,

einen ersten Feldeffekttransistor (76) im Anreicherungsmodus mit einer an den gemeinsamen Verbindungspunkt (V2) angeschlossenen Drainelektrode, mit einer an Erde angeschlossenen Sourceelektrode und mit einer Gitterelektrode, an die das Eingansrückstellsignal (POR) angelegt wird,

einen zweiten Feldeffekttransistor (78) im Anreicherungsmodus mit an den gemeinsamen Verbindungspunkt (V2) angeschlossenen Drain- und Gitterelektroden, und mit einer Sourceelektrode zum Übertragen des Ausgangssteuersignals (V3), und

einen vierten Feldeffekttransistor (87) im Verarmungsmodus mit einer an die Sourceelektrode des zweiten Feldeffekttransistors im Anreicherungsmodus angeschlossenen Drainelektrode und mit an Erde angeschlossenen Source- und Gitterelektroden.

7. Abrufschaltung nach einem der Ansprüche 3 bis 6, dadurch gekennzeichnet, daß die Empfangs- und Umgehungsschaltung (15) weiterhin einschließt:

einen ersten bipolaren Transistor (44), dessen Basis an Erde angeschlossen ist und dessen Emitter an einen Ausgang (42) der Taktmittel (40) angeschlossen ist, und

einen zweiten bipolaren Transistor (46), dessen Basis an den Kollektor des ersten Transistors dessen Emitter an eine negative Spannungsquelle und dessen Kollektor an das Gitter (32) des Feldeffekttransistors (26) angeschlossen ist.

8. Abrufschaltung nach einem der Anspruche 3 bis 7, dadurch gekennzeichnet, das die Schaltmittel (54) einen bipolaren Transistor (66) einschliessen, dessen Emitter und Kollektor auf der Eingangsleitung (20) des Abrufsignals seriengeschaltet sind und dessen Basis an einen Ausgang (56) der Taktmittel (40) angeschlossen ist.

## Claims

1. A terminal polling circuit in a data transmission system comprising a central processor (10) and several series-connected stations (14A ... 14N) each having a terminal (36) responding to a polling signal received on an input line (18) by establishing a communication link with the central processor, said polling circuit providing for each of the stations:

a transistor (26) having a control electrode (32), a second electrode connected to an input line (18, 22) of the polling signal, and a third electrode connected to an output line (24) of the polling signal, and

a receive/bypass circuit (15A ... 15N) which is connected to the input line (18) of the polling signal, to the control electrode (32) of said transistor (26) and to the terminal (36) to supply, when the station is powered, an inhibiting voltage to said transistor by means of its control electrode while applying to the terminal a polling signal which is retransmitted on the output line (24) of the polling signal in case no communication link is to be established with the terminal, said transistor (26) being conductive if the station is unpowered so as to allow the polling signal to pass directly from the input line (18) to the output line (24), said polling circuit being characterized in that said receive/bypass circuit includes for each station:

a terminating impedance (68) having a first terminal connected to ground and a second terminal connected to the input line of said terminal (36),

switching means (54) connected in series on the polling signal line between said second terminal and the polling signal input (20) to said receive/bypass circuit,

timing means (40) for sequentially applying a conduction signal to said transistor (26) and then an inhibiting signal to said switching means (54) when the power supply is out of service and for sequentially applying a conditioning signal to said switching means (54) and then an inhibiting signal to said transistor (26) when the terminal (36) is again powered.

2. A polling circuit according to claim 1, characterized in that said stations are arranged in a loop configuration.

3. A polling circuit according to claim 1 or claim 2, characterized in that said transistor is a field effect transistor (26) whose grid constitutes said control electrode (32), the drain electrode is connected to the polling signal input line (18, 22), and the source electrode is connected to the polling signal output line (24).

4. A polling circuit according to claim 3, characterized in that it furthermore comprises:

a line control circuit (52) having one output connected to the polling signal output line (24), and

unconditioning means (50) connected between said timing means (40) and said line control circuit to supply an unconditioning signal to said line control circuit when said terminal is unpowered.

5. A polling circuit according to claim 3 or claim 4, characterized in that said timing means (40) comprise:

several timing circuits (80, 82, 84), each one being capable of generating a predetermined signal at a given time, following the application of a control signal (V3) to the timing circuit concerned, and

a regulator circuit connected to the inputs of said timing circuits to inhibit generation of said control signal until an input restoring signal (POR) is applied.

6. A polling circuit according to claim 5, characterized in that said regulator circuit furthermore comprises:

a second depletion mode field effect transistor (72) having a drain electrode connected to the power supply (VDD) of the station and source and grid electrodes to which the input restoring signal (POR) is applied,

a third depletion mode field effect transistor (74) having a drain electrode connected to the power supply (VDD) of the station and source and grid electrodes connected to a common junction (V2),

a first enhancement mode field effect transistor (76) having a drain electrode connected to said common junction (V2), a source electrode connected to ground, and a grid electrode to which the input restoring signal (POR) is applied,

a second enhancement mode field effect transistor (78) having drain and grid electrodes connected to said common junction (V2) and a source electrode for the transfer of the output control signal (V3), and

a fourth depletion mode field effect transistor (86) having a drain electrode connected to the source electrode of said second enhancement mode field effect transistor and source and grid electrodes connected to ground.

7. A polling circuit according to any one of claims 3 to 6, characterized in that said receive/bypass circuit (15) furthermore comprises:

a first bipolar transistor (44) whose base is connected to ground, and emitter is connected to an output (42) of said timing means (40), and

a second bipolar transistor (46) whose base is connected to the collector of said first transistor, emitter is connected to a source of negative voltage, and collector is connected to the grid (32) of said field effect transistor (26).

8. A polling circuit according to any one of claims 3 to 7, characterized in that said switching means (54) comprise a bipolar transistor (66) whose emitter and collector are series-connected to the polling signal input line (20) and whose base is connected to an output (56) of said timing means (40).

FIG. 1

FIG. 2

# FIG. 3

# FIG. 4